# EUROPEAN PATENT SPECIFICATION

(11) **EP 1 057 800 B1**
(45) Date of publication and mention of the grant of the patent: **29.06.2005**
(21) Application number: 00110879.4
(22) Date of filing: 23.05.2000
(51) Int. Cl.: C05F 17/02, C05F 9/04, B09B 3/00, B65D 88/56

(54) **A container for composting waste organic materials**
Behälter zur Kompostierung von organischen Abfällen
Conteneur servant à composter des déchets organiques

(30) Priority: 02.06.1999 IT TO990468
(43) Date of publication of application: 06.12.2000
(73) Proprietor: Entsorga Italia S.R.L., 15057 Tortona (AL) (IT)
(72) Inventor: Cella Mazzariol, Pietro Paolo, 15057 Tortona (AL) (IT)
(74) Representative: Robba, Pierpaolo

(56) References cited:
- EP-A- 0 444 334
- DE-A- 2 329 366
- DE-A- 2 331 622
- DE-U- 29 623 667
- US-A- 5 312 754

## Description

The present invention concerns a container for composting organic waste materials, such as mud, agro-industrial waste, domestic garbage etc.

More particularly, the invention relates to a hermetically sealed container in which the composting process is accelerated through forced air circulation.

Processes concerned with transforming organic waste materials have recently undergone a considerable evolution, passing from the conventional process of accumulation in open places to the conditioning of the phenomenon in closed and controlled environments.

To optimise processing, the capability of controlling the transformation process in closed reactors or containers has proven to be a certain advantageous, in that it allows reducing the required time, consistently with the bacterial metabolism.

Composting process takes places according to activity phases of the microbial mass which can be clearly distinguished and can be basically schematised by a first and more reactive phase, known as "bio-stabilisation", during which the ambient conditions (temperature, humidity, aeration degree, porosity and structure of the mass) determine the process development or the failure of process activation, and by a second phase during which the microbial activities slow down and allow a simpler process management.

Recently, composting technologies have been applied also to pre-processing organic waste materials, in order to reduce their impact on the environment (smell and residual putrefaction capability) before conveying them to the dump, and to cause their drying for an optimum energy valorisation.

In recent years, systems based on modular reactors using containers or biocells have become widespread, owing to their simplicity and flexibility from the plant standpoint.

The reactors may consist of metal structures, e.g. movable containers, or of concrete structures, the latter having the drawback of requiring public works that cannot be removed and that can hardly by modulated to cope with possible variations of the plant capacity.

The containers, loaded with the organic material to be processed, have pipes through which they are connected to a forced ventilation system for organic mass aeration and exhausted current processing. A pressure fan supplies the organic mass with fresh air, rich in oxygen; an aspirating fan collects the air made poor in oxygen and full of bad-smelling substances from the container and sends it to a filter system before reintroduction into the atmosphere.

A mobile closed compost container is disclosed, for instance, in **EP-A-0 444 334**, said container comprising a cover, a double bottom, which is formed by a continuous lower base plate and a perforated base located upon said continuous lower base plate, and at least one discharge hatch provided in a side wall of the container.

Another mobile compost container is disclosed, for instance, in **US-A-5 312 754**, said container comprising side walls, a bottom wall and of an optional cover; a perforated second floor is positioned above the bottom wall for supporting organic waste.

**DE 23 29 366 A** and **DE 23 31 622 A** disclose fermentation apparatuses for continuous operation comprising superimposed compartments having their support surfaces equipped with movable plates.

Once the transformation phase is over, the container is opened, by opening a side wall, tilted and shaken, in order to be made free from the material at the inside, whereby the container can again be used for another processing.

However that operation is very often difficult because of the particular structure of the container bottom (grid-shaped or anyhow provided with a lot of openings for air passage) and of the nature of the material contained, that tends to adhere to the walls and the bottom.

Consequently, before any new reuse, it is necessary to visually inspect the cleanness state of the bottom and to manually intervene with a washing operation, to remove at least those residuals obstructing or limiting air passages. Such operation obviously implies inconveniences, an increase of the working costs, risks for the operators coming into direct contact with the waste materials and, if it is not correctly carried out, a reduction of the efficiency of the subsequent processing cycle.

Therefore, a first object of the present invention is to provide a container for composting organic waste materials, as disclosed in claim 1 which is equipped with a bottom comprising movable plates and allowing an efficient and quick detachment of the processed material in the container emptying phase.

Moreover, thanks to the provision of spacers located between the movable plates, an efficient aeration of the bottom is obtained.

The above and other objects are attained by the structure made in accordance with the invention, as claimed in the appended claims.

The above and other objects of the invention will become more apparent from the description of a preferred embodiment, with reference to the accompanying drawings, in which:
- Fig. 1 is a side cross sectional view of a composting container made in accordance with the present invention;
- Fig. 2 is a side cross sectional view of a composting container, made in accordance with the present invention, during the emptying phase;
- Fig. 3 is a front view of a composting container made in accordance with the present invention; and
- Fig. 4 is a perspective view of a detail of the bottom of a composting container made in accordance with the present invention.

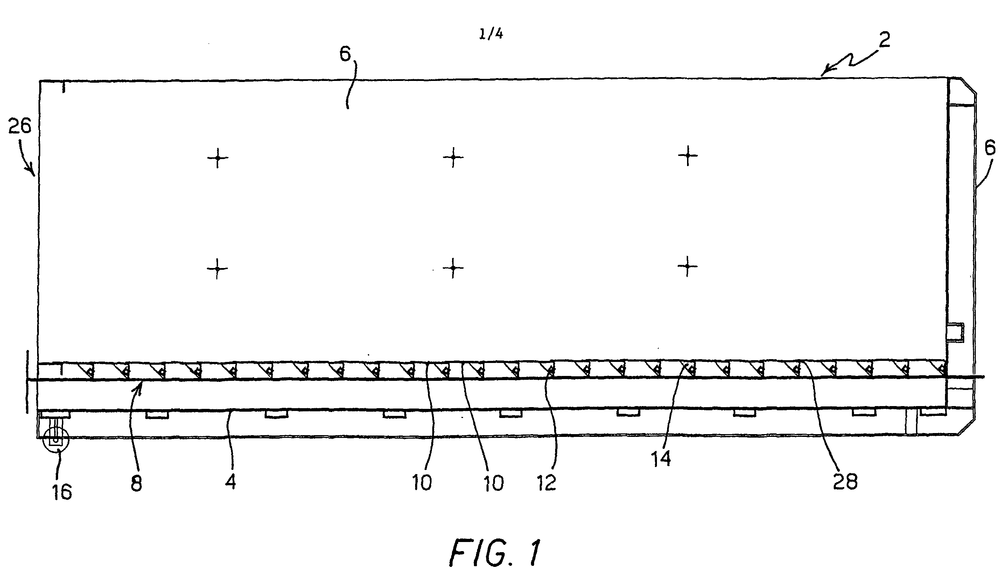

Referring to Fig. 1, a composting container 2 comprises a bottom 4, side walls 6 and an upper cover, not shown in Fig. 1, that can be opened for introducing the organic materials to be transformed into the container.

A left side wall, not shown in the cross-sectional view of Fig. 1 since it is in open position, forms a laterally hinged door (banner door) and it is used for discharging the processed material, through container side 26, once the composting phase is over.

The bottom, the side walls and the cover are made and assembled according to known techniques, and they consist of tubular bearing structures and metal plates suitably worked and painted.

According to the present invention, bottom 4 comprises a support plane 8 made of a plurality of movable plates 10 bent to an "L" shape. Those plates are hinged on longitudinal axes 12, rest on each other in a fish-scale arrangement and are capable of effecting a limited pivotal movement about longitudinal axes 12. Advantageously, all plates 10 are oriented in the same direction, towards the movable outlet door 26.

Plates 10 rest on each other through spacers 28, which define a plurality of longitudinal slots for air passage.

Each L-shaped plate 10 further comprises a plurality of reinforcing members 14, in the shape of right triangles, arranged at regular intervals and welded under the same plates.

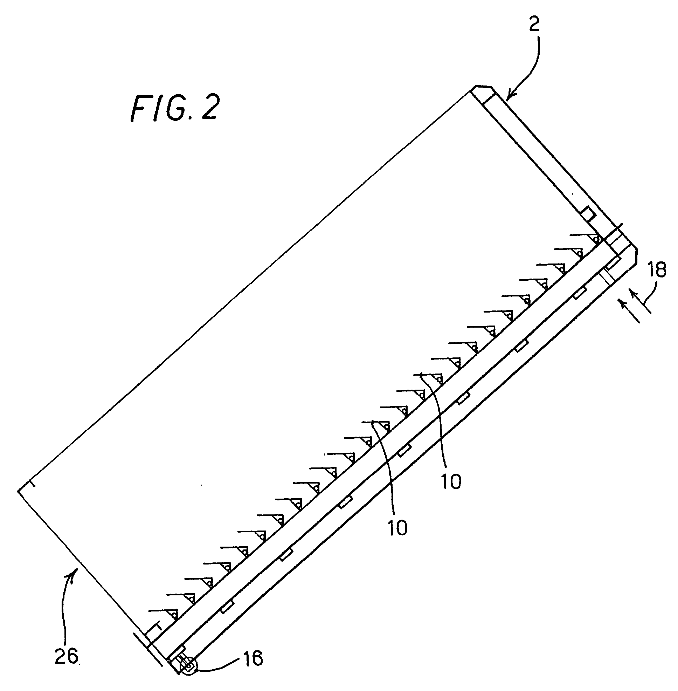

Sliding rollers 16 are provided in correspondence with one of the lower corners of container 2 and are used as sliding support during the emptying operation, as better shown in Fig. 2. Container 2 is thus a container of a type demountable from a truck.

Fig. 2 in effect shows a composting container 2 during the emptying phase. After the banner door on side 26 has been opened, the container is lifted at the opposite side, in the direction of arrows 18, while resting on sliding rollers 16.

After lifting and when most material inside has been discharged, the container is repeatedly shaken, by operating again at the point denoted by arrows 18 and by making L-shaped plates 10 oscillate about their securing pins and knock against each other.

In this way, all material adhering to plates 10 and consequently obstructing the air passages, is readily and quickly removed with a simple mechanical operation and without need for manual interventions.

Moreover, angular stops are provided on the container side walls, to limit the upward oscillatory movement of plates 10 and preventing them from leaving the respective supports.

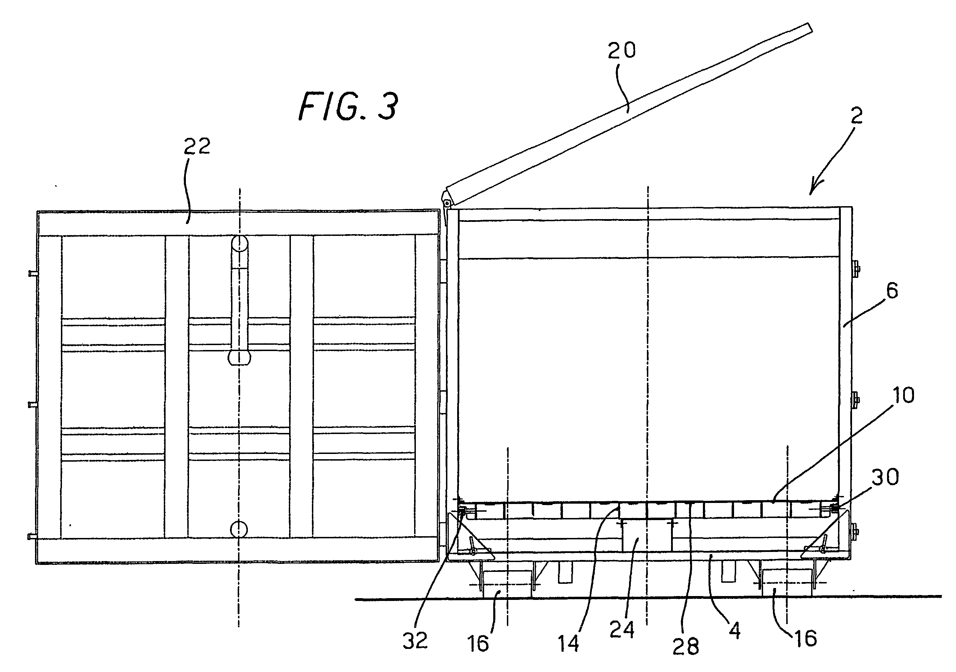

As better seen in Fig. 3, plates 10 are pivoted, at their opposite ends, on the side walls of the container, at points 30 and 32 respectively. Spacers 28 ensure air passage between adjacent plates 10, in correspondence of the rest points.

In their central portion, L-shaped plates 10 rest upon an air feeding collector 24, which is arranged perpendicularly to the same plates, is secured to bottom 4 and is provided with side openings arranged to uniformly distribute the air below support plane 8.

Fig. 3 also shows cover 20, in open position, and side door 22 that can be opened about the lateral hinge.

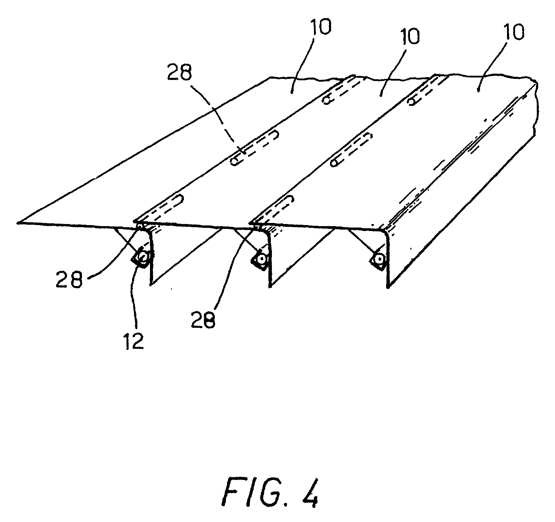

Fig. 4 shows instead in detail a portion of support plane 8 of container bottom 4. More particularly, three L-shaped plates 10 are partly shown, which are pivoted at points 12 and rest on each other in fish-scale arrangement. Spacers 28 are seen at the points where the plates rest on each other. Here, said spacers are obtained by welding lengths of metal round bars that ensure the slots for air passage. Reinforcing members 14, also welded to plates 10, can be partly seen under the plates.

Support plane 8 made in accordance with the present invention therefore allows an efficient air circulation and is self-cleaning: thus, it prevents the processed material from adhering to the container bottom and makes the material sliding during discharging easier.

## Claims

1. A container (2) for composting organic waste materials of a type that can be tilted in order to be made free from the material at the inside, comprising a bottom (4), side walls (6) and an upper cover (20), one of said side walls (6) being provided with a corresponding aperture (26) for evacuating the container (2) when said container (2) is tilted, **characterised in that** said bottom (4) comprises a support plane (8) made of a plurality of plates (10) in a fish-scale arrangement that are pivotable about corresponding longitudinal axes (12) for allowing in the container emptying phase an efficient and quick detachment of the processed material and discharge thereof in a direction substantially parallel to said support plane (8) through said at least one side walls.

2. A container according to claim 1, wherein one of said side walls (6) forms a laterally hinged door used for discharging the processed material once the composting phase is over.

3. A container according to claim 2, wherein said plates (10) are oriented in the same direction towards said laterally hinged door.

4. A container according to claim 1, wherein said plates (10) oscillate about said longitudinal axes (12) while the container is repeatedly shaken.

5. A container according to claim 1, wherein said plates (10) rest on each other.

6. A container according to any preceding claim, wherein said plates (10) are plates bent to an L-shape and comprise one or more reinforcing members (14) of triangular shape, welded under the plates themselves.

7. A container according to any preceding claim, wherein said plates (10) rest on each other through spacers (28) providing slots for air passage.

8. A container according to any preceding claim, wherein said plates (10) are pivoted, at their opposite ends (30, 32), on the side walls of the container.

9. A container according to any preceding claim, further comprising angular stops secured to the side walls of the container and arranged to limit the upward movement of the plates (10).

10. A container according to any preceding claim, wherein said plates (10) rest, at their central portion, upon an air feeding collector (24), which is secured to the bottom (4) of the container, is arranged perpendicularly to the plates (10) and is provided with openings arranged to uniformly distribute the air below the support plane (8).

11. A container according to any preceding claim, wherein said container is a container of a type demountable from a truck.

## Patentansprüche

1. Behälter (2) zur Kompostierung von organischen Abfällen in kippbarer Art, um ihn von Material im Inneren zu befreien, der einen Boden (4), Seitenwände (6) und eine obere Abdeckung (20) umfaßt, wobei eine jener Seitenwände (6) mit einer entsprechenden Öffnung (26) zur Entleerung des Behälters (2) versehen ist, wenn jener Behälter (2) gekippt wird,
**dadurch gekennzeichnet, dass** jener Boden (4) eine Stützebene (8) aufweist, die aus einer Vielzahl von Blechen (10) in Fischschuppenanordnung hergestellt wird, die um entsprechende Längsachsen (12) drehbar gelagert sind, um in der Entleerungsphase des Behälters eine effiziente und schnelle Ablösung des aufbereiteten Materials und seine Entladung in einer im wesentlichen zu jener Stützebene (8) parallelen Richtung durch jene mindestens eine Seitenwand zu erlauben.

2. Behälter nach Anspruch 1,
wobei eine jener Seitenwände (6) eine seitlich angeschlagene Tür zur Entladung des aufbereiteten Materials bildet, wenn der Kompostiervorgang abgeschlossen ist.

3. Behälter nach Anspruch 2,
wobei jene Bleche (10) in derselben Richtung zu jener seitlich angeschlagenen Tür hin ausgerichtet sind.

4. Behälter nach Anspruch 1,
wobei jene Bleche (10) um jene Längsachsen (12) herum schwingen, während der Behälter wiederholt gerüttelt wird.

5. Behälter nach Anspruch 1,
wobei jene Bleche (10) aufeinander aufliegen.

6. Behälter nach einem der vorhergehenden Ansprüche,
wobei jene Bleche (10) winkelförmig gebogene Bleche sind und ein oder mehrere Verstärkungselemente (14) in Dreiecksform aufweisen, die unter den Blechen selbst angeschweißt werden.

7. Behälter nach einem der vorhergehenden Ansprüche,
wobei jene Bleche (10) über Abstandshalter (28) aufeinander liegen, die Schlitze für den Luftdurchgang bilden.

8. Behälter nach einem der vorhergehenden Ansprüche,
wobei jene Bleche (10) an ihren entgegengesetzten Enden (30, 32) an den Seitenwänden des Behälters drehbar gelagert sind.

9. Behälter nach einem der vorhergehenden Ansprüche,
der außerdem an den Seitenwänden des Behälters befestigte Winkelanschläge aufweist, die zur Begrenzung der Aufwärtsbewegung der Bleche (10) angeordnet sind.

10. Behälter nach einem der vorhergehenden Ansprüche,
wobei jene Bleche (10) in ihrer mittleren Partie auf einem Luftzuführkanal (24) aufliegen, der am Boden (4) des Behälters befestigt und senkrecht zu den Blechen (10) angeordnet sowie mit Öffnungen zur gleichmäßigen Verteilung der Luft unter der Abstützebene (8) versehen ist.

11. Behälter nach einem der vorhergehenden Ansprüche,
wobei jener Behälter ein von einem Lastwagen abladbarer Behälter ist.

## Revendications

1. Conteneur (2) pour composter des déchets organiques, d'un type qui peut être incliné (basculé) afin d'être libéré de la matière se trouvant à l'intérieur, comprenant un fond (4), des parois latérales, (6) et d'un couvercle supérieur (20), l'une desdites parois latérales (6) étant pourvue d'une ouverture correspondante (26) pour vider le conteneur (2) lorsque ledit conteneur (2) est incliné, **caractérisé en ce que** ledit fond (4) comporte un plan de support (8) constitué d'une pluralité de plaques (10) agencées en écailles de poisson qui peuvent pivoter autour des axes longitudinaux correspondants (12) pour permettre dans la phase de vidange du conteneur une séparation efficace et rapide du matériau traité et son évacuation dans une direction essentiellement parallèle audit plan de support (8) à travers au moins une paroi latérale.

2. Conteneur selon la revendication 1 dans lequel l'une desdites parois latérales (6) forme une porte articulée latéralement, utilisée pour évacuer la matière traitée une fois que la phase de compostage est achevée.

3. Conteneur selon la revendication 2 dans lequel lesdites plaques (10) sont orientées dans la même direction vers ladite porte articulée latéralement.

4. Conteneur selon la revendication 1 dans lequel lesdites plaques (10) oscillent autour desdits axes longitudinaux (12) tandis que le conteneur est secoué de façon répétée.

5. Conteneur selon la revendication 1, dans lequel lesdites plaques (10) reposent les unes sur les autres.

6. Conteneur selon l'une quelconque des revendications précédentes dans lequel lesdites plaques (10) sont des plaques recourbées suivant une configuration en L et comportent un ou plusieurs éléments de renforcement (14) de forme triangulaire, soudés sous les plaques elles-mêmes.

7. Conteneur selon l'une quelconque des revendications précédentes dans lequel lesdites plaques (10) reposent l'une sur l'autre par l'intermédiaire d'éléments d'écartement (28) fournissant des fentes pour le passage de l'air.

8. Conteneur selon l'une quelconque des revendications précédentes dans lequel lesdites plaques (10) sont montées pivotantes au niveau de leurs extrémités opposées (30, 32) sur les parois latérales du conteneur.

9. Conteneur selon l'une quelconque des revendications précédentes comprenant, de plus, des éléments d'arrêt angulaires fixés aux parois latérales du conteneur et agencés pour limiter le déplacement vers le haut des plaques (10).

10. Conteneur selon l'une quelconque des revendications précédentes dans lequel lesdites plaques (10) reposent, au niveau de leur partie centrale, sur un collecteur d'alimentation en air (24) qui est fixé au fond (4) du conteneur, est disposé perpendiculairement aux plaques (10) et est doté d'ouvertures agencées pour distribuer l'air de façon uniforme au-dessous du plan de support (8).

11. Conteneur selon l'une quelconque des revendications précédentes dans lequel ledit conteneur est un conteneur d'un type démontable à partir d'un camion.
